# EUROPEAN PATENT APPLICATION

(11) **EP 3 480 417 A1**
(43) Date of publication of application: **08.05.2019**
(21) Application number: 18204917.1
(22) Date of filing: 07.11.2018
(51) Int. Cl.: E06C 1/18, E05D 11/10

(54) **MECHANICAL STRUCTURE**

(30) Priority: 07.11.2017 CN 201721472774 U; 11.12.2017 CN 201721720518 U; 25.04.2018 CN 201820602486 U
(71) Applicant: Chen, Wan Yu, 241 New Taipei City (TW)
(72) Inventor: Chen, Wan Yu, 241 New Taipei City (TW)
(74) Representative: Casalonga

(57) **Abstract**

The present disclosure provides a mechanical structure, including a first link having a first end and a second end, a second link having a first end and a second end, an operative portion, wherein the operative portion comprises a first portion and a second portion unparalleled to the first portion, a connection member connecting the first end of the first link, the first end of the second link, and the first portion of the operative portion, a first protrusion on the second portion of the operative portion, a second protrusion on the second portion of the operative portion, wherein the first link is in contact with the first protrusion and the second link is in contact with the second protrusion when a first angle is between the first link and the second link.

## Description

### BACKGROUND

When a user has intention to reach an elevated position, a mechanical structure, such as a supporter, a ladder, or the like, may provide an elevated standpoint and bear the weight of the user on such standpoint. In order to improve the durability and reliability of a mechanical structure and further ameliorate safety and/or efficiency of using a mechanical structure as an elevated standpoint, an improved mechanical structure is entailed.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
FIG. 1 is a perspective view showing a mechanical structure in a first state, in accordance with some embodiments of the present disclosure.
FIG. 2 is a side view showing a mechanical structure in a second state, in accordance with some embodiments of the present disclosure
FIG. 2A is an enlarged schematic view showing a side view of a top portion of a mechanical structure, in accordance with some embodiments of the present disclosure.
FIG. 3 is a perspective view showing a connector in a first state, in accordance with some embodiments of the present disclosure.
FIG. 3A is an enlarged schematic view showing a front view of a connector in a first state, in accordance with some embodiments of the present disclosure.
FIG. 4 is a perspective view showing a connector in a second state, in accordance with some embodiments of the present disclosure.
FIG. 4A is an enlarged schematic view showing a front view of a connector in a second state, in accordance with some embodiments of the present disclosure.
FIG. 5 is an exploded view of a connector, in accordance with some embodiments of the present disclosure.
FIG. 6 is a perspective view showing a first link, in accordance with some embodiments of the present disclosure.
FIG. 6A is a top view showing a first link, in accordance with some embodiments of the present disclosure.
FIG. 7 is a perspective view showing a second link, in accordance with some embodiments of the present disclosure.
FIG. 8 is a perspective view showing a connector in a first state, in accordance with some embodiments of the present disclosure.
FIG. 9 is an exploded view of a connector, in accordance with some embodiments of the present disclosure.
FIG. 10A is a cross sectional view of a control portion, an operative portion, and a positioning member in a first state, in accordance with some embodiments of the present disclosure.
FIG. 10B is a cross sectional view of a control portion, an operative portion, and a positioning member in a second state, in accordance with some embodiments of the present disclosure.
FIG. 10C is an enlarged schematic view showing a front view of a connector in a first state, in accordance with some embodiments of the present disclosure.
FIG. 10D is an enlarged schematic view showing a front view of a connector in a second state, in accordance with some embodiments of the present disclosure.
FIG. 11A is a perspective view showing an operative portion, in accordance with some embodiments of the present disclosure.
FIG. 11B is a cross sectional view showing an operative portion, in accordance with some embodiments of the present disclosure.
FIG. 11C is a bottom view showing an operative portion, in accordance with some embodiments of the present disclosure.
FIG. 12 is a perspective view showing a connector in a first state, in accordance with some embodiments of the present disclosure.
FIG. 13 is an exploded view of a connector, in accordance with some embodiments of the present disclosure.
FIG. 14A is a cross sectional view of a control portion, an operative portion, and a positioning member in a first state, in accordance with some embodiments of the present disclosure.
FIG. 14B is a cross sectional view of a control portion, an operative portion, and a positioning member in a second state, in accordance with some embodiments of the present disclosure.
FIG. 14C is an enlarged schematic view showing a front view of a connector in a first state, in accordance with some embodiments of the present disclosure.
FIG. 14D is an enlarged schematic view showing a front view of a connector in a second state, in accordance with some embodiments of the present disclosure.
FIG. 15A is a perspective view showing an operative portion, in accordance with some embodiments of the present disclosure.
FIG. 15B is a cross sectional view showing an operative portion, in accordance with some embodiments of the present disclosure.
FIG. 15C is a bottom view showing an operative portion, in accordance with some embodiments of the present disclosure.
FIG. 16 is a perspective view showing a shaft base, in accordance with some embodiments of the present disclosure.
FIG. 17 is a perspective view showing a positioning member, in accordance with some embodiments of the present disclosure.
FIG. 18A is a perspective view showing a mechanical structure in a first state, in accordance with some embodiments of the present disclosure.
FIG. 18B is a perspective view showing a mechanical structure in a first state, in accordance with some embodiments of the present disclosure.
FIG. 19 is a perspective view showing a mechanical structure in a first state, in accordance with some embodiments of the present disclosure.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in the respective testing measurements. Also, as used herein, the terms "substantially," "approximately," or "about" generally means within a value or range which can be contemplated by people having ordinary skill in the art. Alternatively, the terms "substantially," "approximately," or "about" means within an acceptable standard error of the mean when considered by one of ordinary skill in the art. People having ordinary skill in the art can understand that the acceptable standard error may vary according to different technologies. Other than in the operating/working examples, or unless otherwise expressly specified, all of the numerical ranges, amounts, values and percentages such as those for quantities of materials, durations of times, temperatures, operating conditions, ratios of amounts, and the likes thereof disclosed herein should be understood as modified in all instances by the terms "substantially," "approximately," or "about." Accordingly, unless indicated to the contrary, the numerical parameters set forth in the present disclosure and attached claims are approximations that can vary as desired. At the very least, each numerical parameter should at least be construed in light of the number of reported significant digits and by applying ordinary rounding techniques. Ranges can be expressed herein as from one endpoint to another endpoint or between two endpoints. All ranges disclosed herein are inclusive of the endpoints, unless specified otherwise.

Conventionally, a user may be entailed to stow or extend a mechanical structure by directly contacting a link of the connector. However, a link of the connector is often damaged, stained, or having sharp edges, which may induce safety risk or health problems. A user may also be nipped by the connector or the mechanical structure due to lack of protection, thus the user may be exposed to the risk of injury. In addition, a mechanical structure without a proper limitation with regard to rotation may cause over-rotation, which may induce collision by the ends thereof, thereby reliability and durability of the mechanical structure is deteriorated.

In order to solve the aforementioned issues, an improvement on a mechanical structure is admirably entailed.

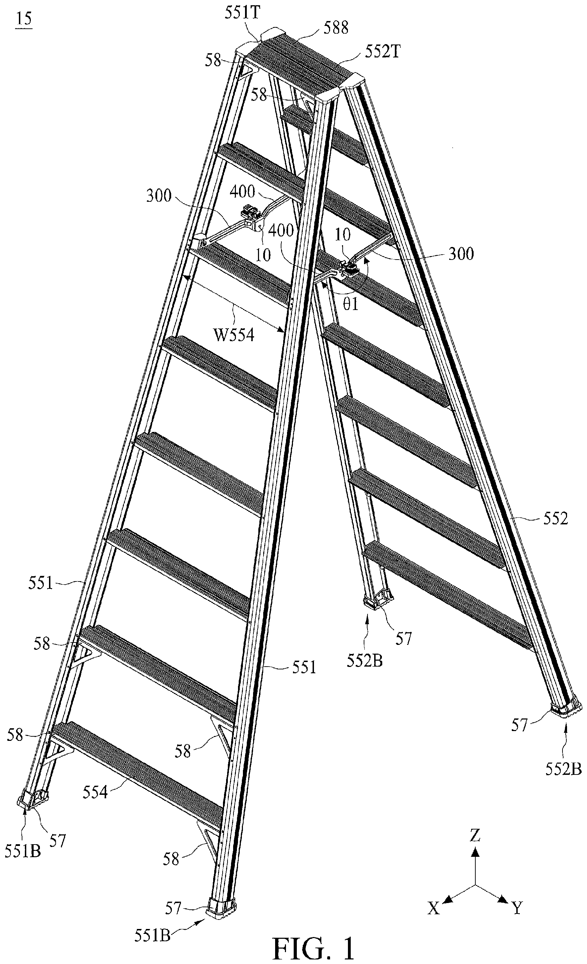

Referring to **FIG. 1**, **FIG. 1** is a perspective view showing a mechanical structure in a first state, in accordance with some embodiments of the present disclosure. A mechanical structure **15** may include a first part **551**, a second part **552**, and a connector **10**. The first part **551** and the second part **552** may be made by a material having an adequate mechanical strength to bear a weight of human, wherein the material may include metal, steel, stainless steel, aluminum, metal alloy, or other suitable materials. The first part **551** has a connecting board **554**, wherein a width **W554** of the connecting board **554** may be at least greater than a width of a human foot, e.g. 3cm, so that the connecting board **554** can serve as a standpoint for a user and thereby support the user. The second part **552** may, or may not have a connecting board. In some embodiments, the second part **552** may include a supporting structure for ameliorating mechanical strength and/or stability, which may, or may not allow a user to step onto. In some embodiments, a strengthening structure **58** for improving the strength of the connecting board **554** is connected between the connecting board **554** and the first part **551**, and/or connected between the connecting board **554** and the second part **552**. The strengthening structure **58** may be a structure similar to triangle shape, a hollowed triangle shape, polygon shape, or the like.

The first part **551** has a top surface **551T** and the second part **552** has a top surface **552T**. In some embodiments, the top surface **551T** and the top surface **552T** may be coplanar, which constitutes a platform **558**. In some other embodiments, the top surface **551T** and the top surface **552T** are not coplanar. In some embodiments, the first part **551** has a shape tapering toward the top surface **551T**, and the second part **552** has a shape tapering toward the top surface **552T**. In some embodiments, the first part **551** and/or the second part **552** may include hollowed chambers.

The connector **10** connected between the first part **551** and the second portion **552**. The mechanical structure **15** may optionally include two or more connector **10** having an end connected to the first part **551**, and another end connected to the second part **552**. It is noteworthy that in some embodiments, two connectors are identical as two connectors **10** are disposed on the opposite sides of the mechanical structure **15** and facing in opposite direction, with one connector **10** may have the first link **300** being connected to the first part **551** and the second link **400** being connected to the second part **552**, while another one connector **10** may have the first link **300** being connected to the second part **552** and the second link **400** being connected to the first part **551**. In some other embodiments, two connectors **10** are disposed in substantially symmetrical or geometrically opposite fashion, wherein the first links **300** of both the connectors **10** are connected to the first part **551** and the second links **400** of both the connectors **10** are connected to the second part **552**. Those skilled in the art should also realize that such symmetrically designed configurations do not depart from the spirit and scope of the present disclosure, as duplicated explanations are omitted hereinafter.

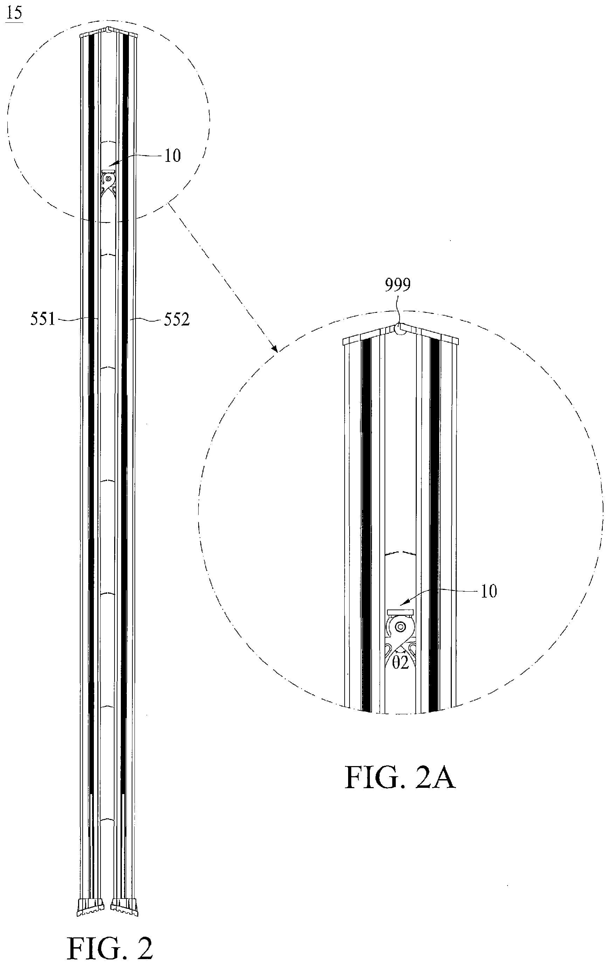

In some embodiments, the mechanical structure **15** optionally include a hinge **999** (shown in **FIG. 2A**) connected between the first part **551** and the second part **552**, wherein the hinge **999** allows the first part **551** and the second portion **552** to relatively rotates around a given rotational axis, as an end **551B** of the first part **551** distal to the top surface **551T** can move toward or move away from an end **552B** of the second part **552** distal to the top surface **552T**. In some embodiments, the mechanical structure **15** may include two or more hinges **400**, each on one side of the top portion of the mechanical structure **15**, to facilitate the smoothness and the stability of the rotation thereof.

In some embodiments, the mechanical structure **15** further include a pad **57** covering a bottom surface of the first part **551** and/or a bottom surface of the second part **552**. The pad **57** may be materials with higher friction coefficient, such as plastic, rubber, polymer, or other suitable compositions. The pad **57** prevents the mechanical structure **15** from easily flipping over or gliding, thus reduces the risk of inducing injuries.

Referring to **FIG. 1**, **FIG. 2** and **FIG. 2A**, **FIG. 2** is a side view showing a mechanical structure in a second state, **FIG. 2A** is an enlarged schematic view showing a side view of a top portion of a mechanical structure, in accordance with some embodiments of the present disclosure. **FIG. 1** illustrates a position of the mechanical structure **15** standing on the end **551B** and the end **552B**, wherein a first angle **θ₁** is between the first link **300** and the second link **400** of the connector **10**, wherein such position is denoted as a first state hereinafter. In some embodiments, the first angle θ₁ is an obtuse angle. In some embodiments, the first angle **θ₁** is about 180 degrees. **FIG. 2** and **FIG. 2A** illustrates the position of the mechanical structure **15** being stowed (i.e. a distance between the end **551B** and the end **552B** are closer than **FIG. 1** thereof), wherein a second angle **θ₂** less than the first angle **θ₁** is between the first link **300** and the second link **400** of the connector **10**, as such position is denoted as a second state hereinafter. The mechanical structure **15** in the first state provides a stable structure and a standpoint for a user to reach an elevated position; while the mechanical structure **15** in the second state allows a user to transport the mechanical structure **15** easier and saves space with regard to storage.

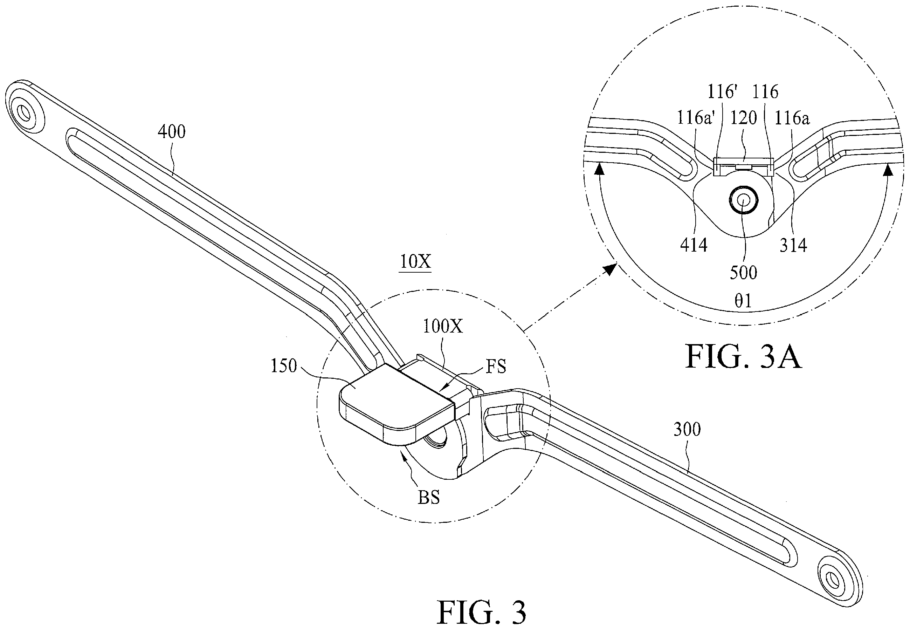

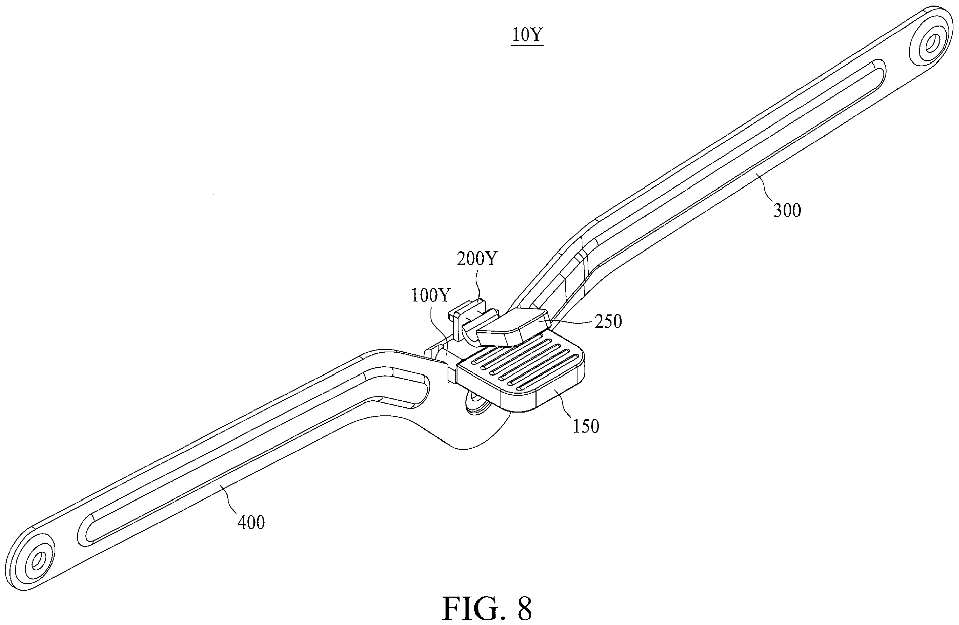

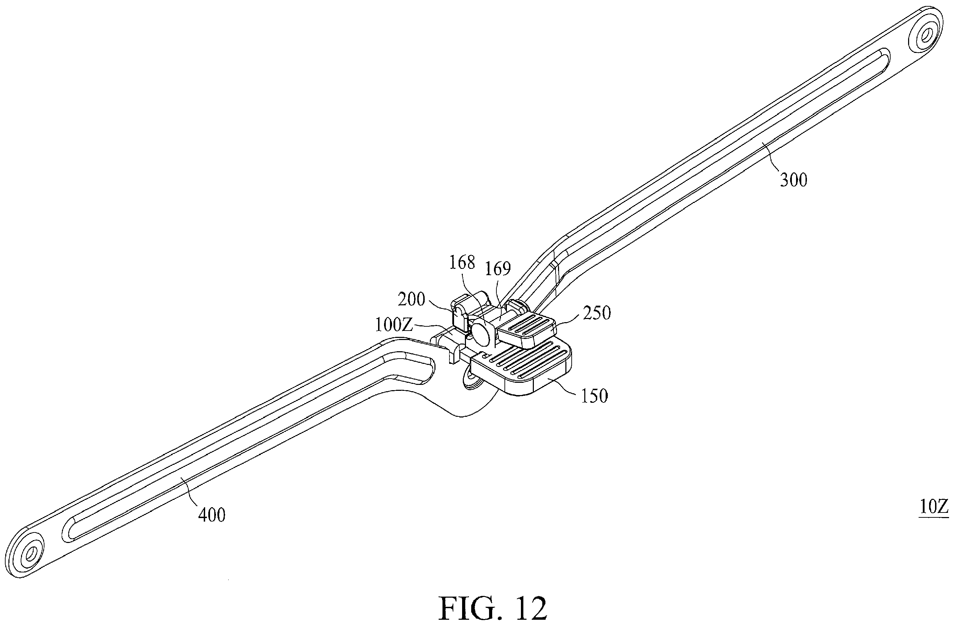

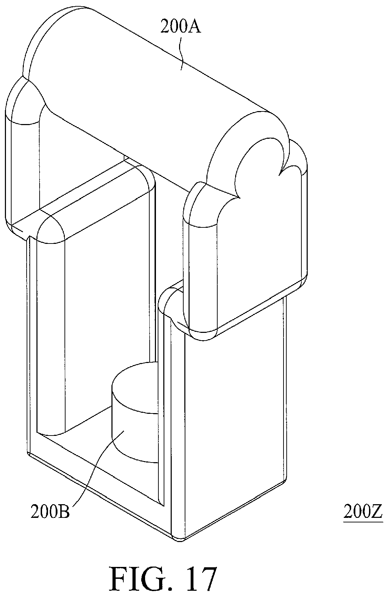

Hereinafter a connector **10X** (illustrated in **FIG. 3** to **FIG.** 7), a connector **10Y** (illustrated in **FIG. 8** to **FIG. 11C**), and a connector **10Z** (illustrated in **FIG. 12** to **FIG. 17**) are variations of the aforesaid connector **10**, that is, any connector **10** provided in the present disclosure can be substituted by one or more of the a connector **10X**, a connector **10Y**, and a connector **10Z**.

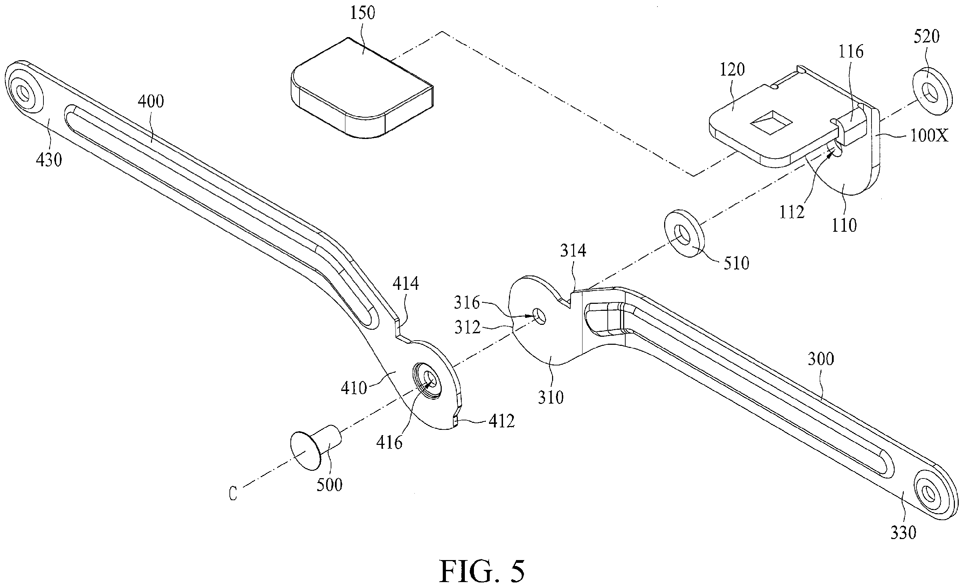

Referring to **FIG. 3**, **FIG. 3A**, and **FIG. 5**, **FIG. 3** is a perspective view showing a connector **10X** in a first state, **FIG. 3A** is an enlarged schematic view showing a front view of a connector **10X** in a first state, **FIG. 5** is an exploded view of a connector **10X**, in accordance with some embodiments of the present disclosure. The connector **10X** at least includes a first link **300**, a second link **400**, an operative portion **100X**, and a connection member **500**. The operative portion **100X** includes a first portion **110** and a second portion **120**, wherein the second portion **120** is unparalleled to the first portion **110**. In some embodiments, an angle between the first portion **110** and the second portion **120** is about 90 degrees. The second portion **120** of the operative portion **100X** has a first side **FS** proximal to the top surface **551T** of the first part **551** (shown in **FIG. 1**) and a second side **BS** opposite to the first side **FS.** A hole **112** is configured on the first portion **110** of the operative portion **100X**.

The first link **300** has a first end **310** and a second end **330** opposite to the first end **310**; while the second link **400** has a first end **410** and a second end **430** opposite to the first end **410**. The connection member **500** rotatably connects the first link **300** and the second **400** to the first portion **110** of the operative portion **100X**. The connection member **500** allows the first link **300** and the second link **400** to rotate around an axis **C**. In some embodiments, the connection member **500** penetrates a first aperture **316** configured on the first end **310** of the first link **300**, a first aperture **416** configured on the first end **410** of the second link **400**, and the hole **112** configured on the first portion **110** of the operative portion **100X**. In some embodiments, the connector **10X** may further include a washer **510** to ameliorate the smoothness of rotation. In some embodiments, the connection member **500** is a rivet or a screw set, as a ring **520** or a nut is optionally included in the connector **10X** to engage with the connection member **500** or to ameliorate the smoothness of rotation.

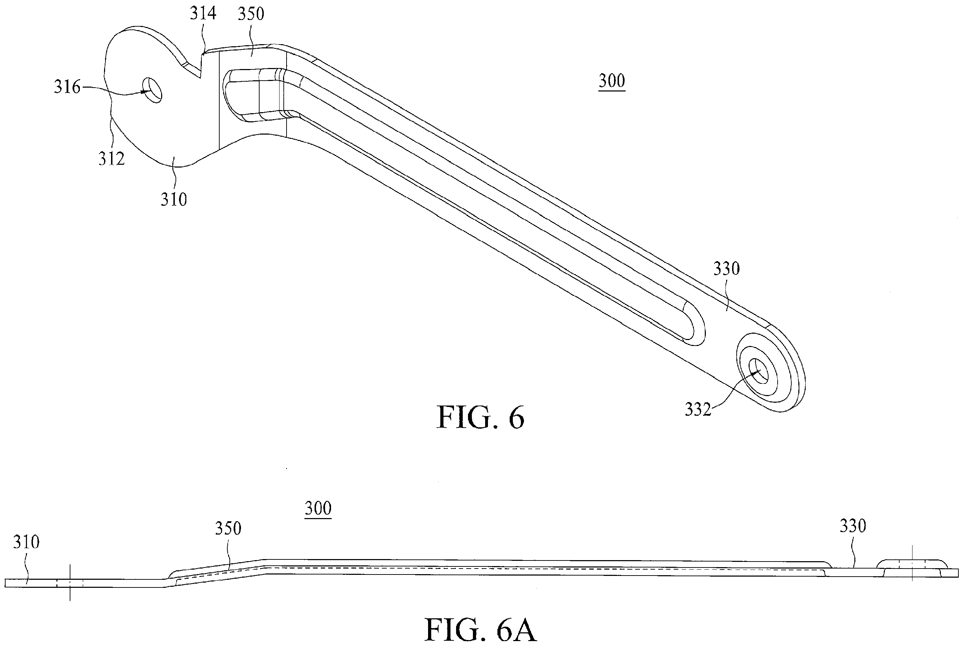

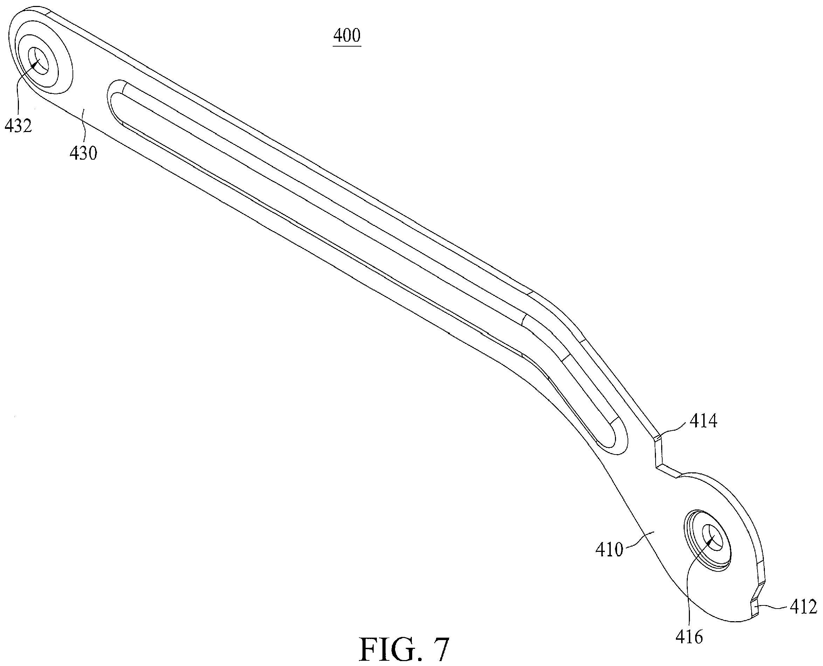

Referring to **FIG. 5**, **FIG. 6**, **FIG. 6A** and **FIG. 7**, **FIG. 6** is a perspective view showing a first link, **FIG. 6A** is a top view showing a first link, and **FIG. 7** is a perspective view showing a second link, in accordance with some embodiments of the present disclosure. The second end **330** of the first link **300** is connected to one of the first part **551** or the second part **552**, as the second end **430** of the second link **400** is connected to the other one of the first part **551** or the second part **552**. In some embodiments, a second aperture **332** is configured on the second end **330** of the first link **300** and a second aperture **432** is configured on the second end **430** of the second link **400**, thereby the connector **10X** can be fixated to the mechanical structure **15** with fixtures or other suitable fixing structures with simplified fabrication process. In some embodiments, a slant portion **350** may be optionally included with regard to ensure the balance of the connector **10X**, that is, the second aperture **332** of the first link **300** and the second aperture **432** of the second link **400** is on a same plane parallel to X-Z plane (shown in **FIG. 1**), wherein +Z is the height direction of the mechanical structure **15**.

Referring back to **FIG. 3**, **FIG. 3A**, **FIG. 5**, **FIG. 6**, and **FIG. 6A**, when the mechanical structure **15** is in the first state, the second portion **120** of the operative portion **100X** engages with the first link **300** and the second link **400**, as the first angle **θ₁** is between the first link **300** and the second link **400** of the connector **10.** A first protrusion **116** and a second protrusion **116'** are disposed on the second side **BS** of the operative portion **100X.** A first extension limiting portion **314** and a second extension limiting portion **414** are configured on the first end **310** of the first link **300** and the first end **410** of the second link **400** respectively in order to contact with the first protrusion **116** and the second protrusion **116'** when the mechanical structure **15** (shown in **FIG. 1**) is in the first state, thus preventing over-rotation between the first link **300** and the second link **400**, or avoiding over-extension of the connector **100X**, further improve the durability of the mechanical structure **15**. In some embodiments, the first extension limiting portion **314** engages with a bottom surface **116b** and/or a sidewall **116a** of the first protrusion **116**; while the second extension limiting portion **414** engages with a bottom surface **116b'** and/or a sidewall **116a'** of the second protrusion **116'**. It should be noted that the first protrusion **116** and the second protrusion **116'** can be a connected structure or separated structure.

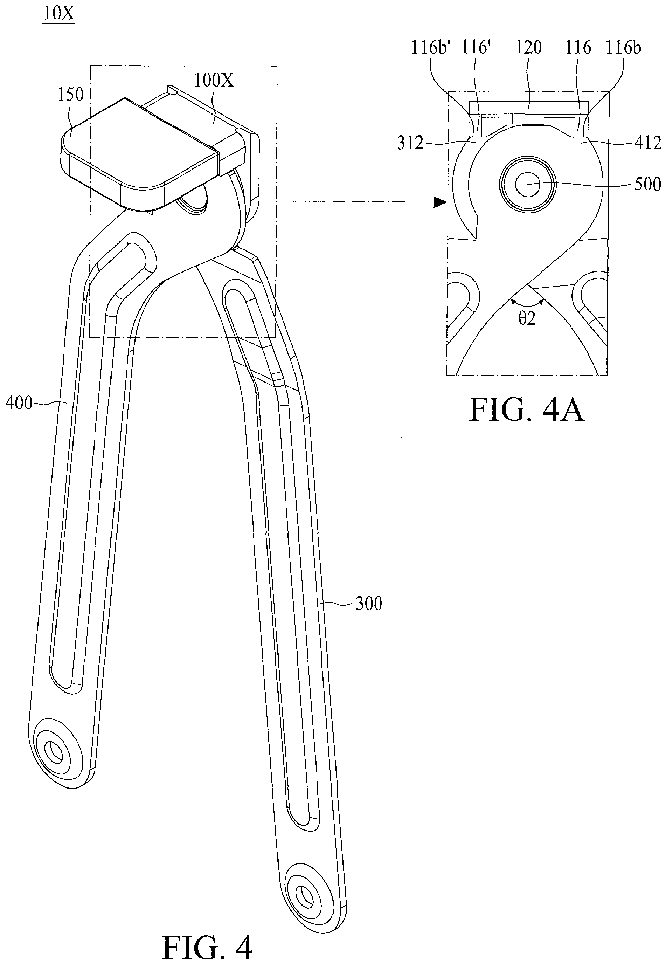

Referring to **FIG. 1**, **FIG. 3**, **FIG. 3A**, **FIG. 4**, **FIG. 4A** and **FIG. 5**, **FIG. 4** is a perspective view showing a connector **10X** in a second state, and FIG. 4A is an enlarged schematic view showing a front view of a connector **10X** in a second state, in accordance with some embodiments of the present disclosure. When the mechanical structure **15** is in the first state, a force along +Z direction (i.e. height direction) can be applied on the second side **BS** of the second portion **120** of the operative portion **100X**, thus the second portion **120** of the operative portion **100X** may be moved away from the connection member **500** and allow the first protrusion **116** and the second protrusion **116'** to respectively disengage with the first extension limiting portion **314** of the first link **300** and the second extension limiting portion **414** of the second link **400**. Thereby the first link **300** and the second link **400** is allowed to be rotated around the axis **C** while the second end **330** of the first link **300** and the second end **430** of the second link **400** can move toward each other. As a result, the mechanical structure **15** can be stowed to the second state, wherein the second angle **θ₂** less than the first angle **θ₁** is between the first link **300** and the second link **400**. In some embodiments, in order to avoid impingement (e.g. accidental collision or clamping a user's finger) between the first part **551** and the second part **552**, the rotation of the first link **300** and the second link **400** is limited by the configuration of the first protrusion **116** and the second protrusion **116'**. Alternatively stated, an angle between the first link **300** and the second link **400** is in a range from the first angle **θ₁** to the second angle **θ₂**. A first stowing limiting portion **312** of the first link **300** at least contacts with the bottom surface **116b'** of the second protrusion **116'**; while a second stowing limiting portion **412** of the second link **400** engages with a bottom surface **116b** of the first protrusion **116** when the mechanical structure **15** is in the second state. By virtue of the configuration of having a first protrusion **116** and the second protrusion **116'** to contact with the first link **300** and the second link **400** in the first state or in the second state, the stability and the safety of the mechanical structure **15** can be improved. In addition, the contact surfaces between the first link **300**, the second link **400**, the first protrusion **116** and the second protrusion **116'** may be different between the first state and the second state, thus the durability of the connector **10X** can be improved.

When an angle between the first link **300** and the second link **400** is less than the first angle **θ₁**, by increasing the angle between the first link **300** and the second link **400** from an angle less than the first angle **θ₁** (e.g. the second angle **θ₂**) to the first angle **θ₁**, as well as an angle between the first part **551** and the second part **552**, the second portion **120** of the operative portion **100X** moves toward the connection member **500** and thus engages with the first extension limiting portion **314** and the second extension limiting portion **414**, wherein the mechanical structure **15** is thereby transferred to the first state as the first link **300** and the second link **400** are locked.

In some embodiments, a sleeve **150** may at least cover a portion of the second portion **120** of the operative portion **100X** so that a user can apply force on a mild surface, wherein a sharp edge, burr, metal edge, or rough surface can be covered by the sleeve **150**, thus incise injury can be avoided. The sleeve **150** may include plastic, polymer, rubber, organic substances, or the like. In some embodiments, the second portion **120** of the operative portion **100X** may include a mating engagement structure, such as protrusions and recesses, to ameliorate adhesion with the sleeve **150**.

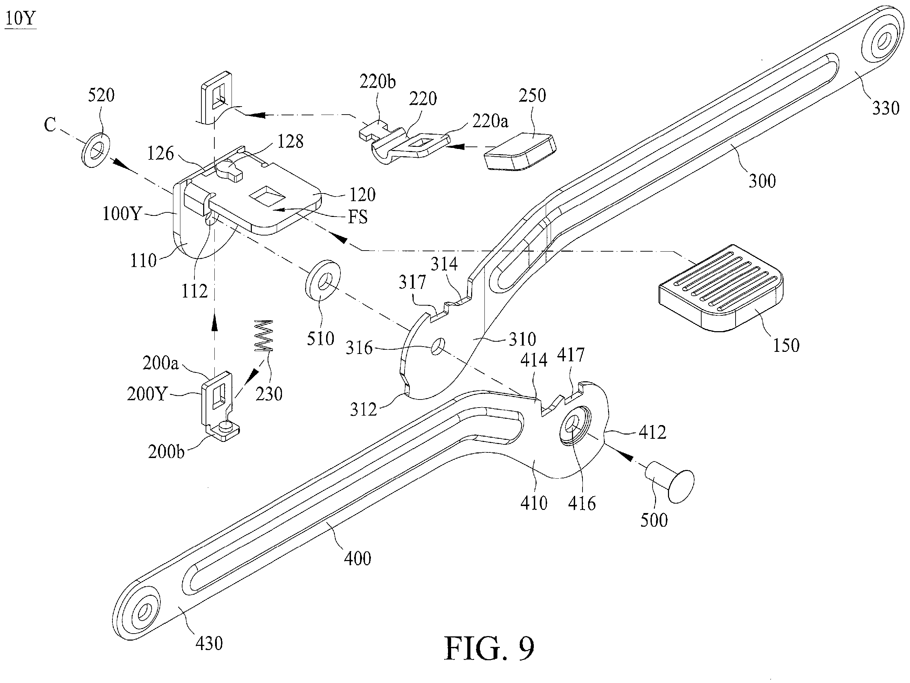

Referring to **FIG. 8** and **FIG. 9**, **FIG. 8** is a perspective view showing a connector **10Y** in a first state, and **FIG. 9** is an exploded view of a connector **10Y**, in accordance with some embodiments of the present disclosure. Note that hereinafter elements in **FIG. 8** to **FIG. 11C** being the same as or similar to aforesaid counterparts within **FIG. 3** to **FIG. 7** are denoted by the same reference numerals, as duplicated explanations are omitted. The connector **10Y** at least includes a first link **300**, a second link **400**, an operative portion **100Y**, a positioning member **200Y**, a control portion **220**, and a connection member **500**. The operative portion **100Y** includes a first portion **110** and a second portion **120**, wherein the second portion **120** is unparalleled to the first portion **110**. In some embodiments, an angle between the first portion **110** and the second portion **120** is about 90 degrees. In some embodiments, no relative motion occurs between the first portion **110** and the second portion **120** herein. The second portion **120** of the operative portion **100Y** has a first side **FS** proximal to the top surface **551T** of the first part **551** (shown in **FIG. 1**) and a second side **BS** opposite to the first side **FS**. A hole **112** is configured on the first portion **110** of the operative portion **100Y**.

The connection member **500** rotatably connects the first link **300** and the second **400** to the first portion **110** of the operative portion **100Y**. The connection member **500** allows the first link **300** and the second link **400** to rotate around an axis **C**. In some embodiments, the connection member **500** penetrates a first aperture **316** configured on the first end **310** of the first link **300**, a first aperture **416** configured on the first end **410** of the second link **400**, and the hole **112** configured on the first portion **110** of the operative portion **100Y**.

The control portion **220** is disposed on the first side **FS** of the operative portion **100Y**, wherein the control portion has a first end **220a** and a second end **220b** proximal to the first portion **110** of the operative portion **100Y**. The positioning member 200Y is configured to penetrate an opening **126** configured on the second portion **120** of the operative portion **100Y**, wherein the positioning member **200Y** has a first end **200a** and a second end **200b** opposite to the first end **200a**, wherein the first end **200a** is connected to the second end **220b** of the control portion **220**. In some embodiments, an elastic member **230** is disposed between second end **200b** of the positioning member **200Y** and the second side **BS** of the operative portion **100Y**. The elastic member **230** may be a spring, a coil, or the like. Since the elastic member **230** may be compressed (i.e. shorter than a natural length thereof), the elastic member **230** may be configured to constantly apply a force on the positioning member **200Y** to press against the first link **300** and/or the second link **400** along a direction toward the connection member **500** (and away from the operative portion **100Y**).

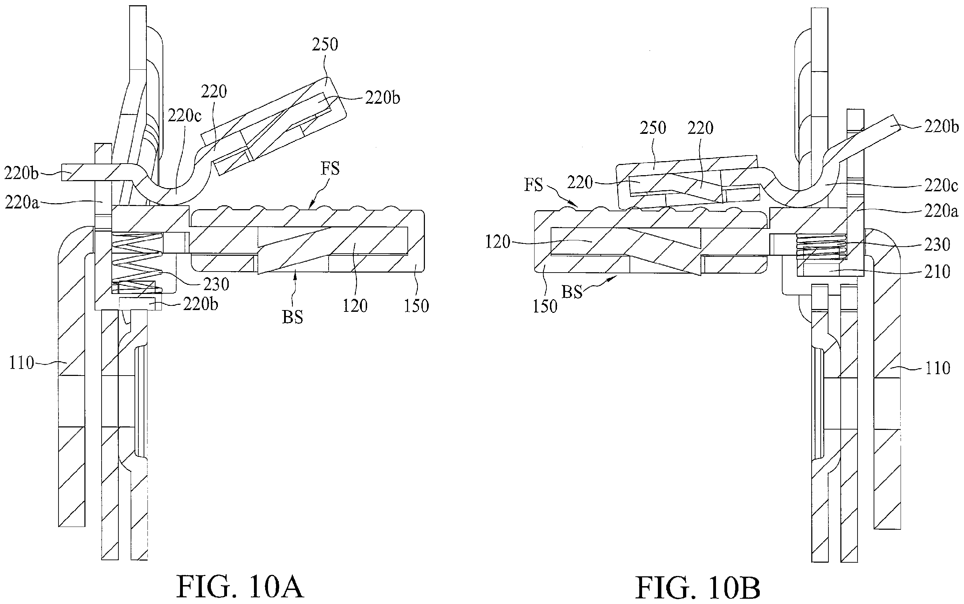

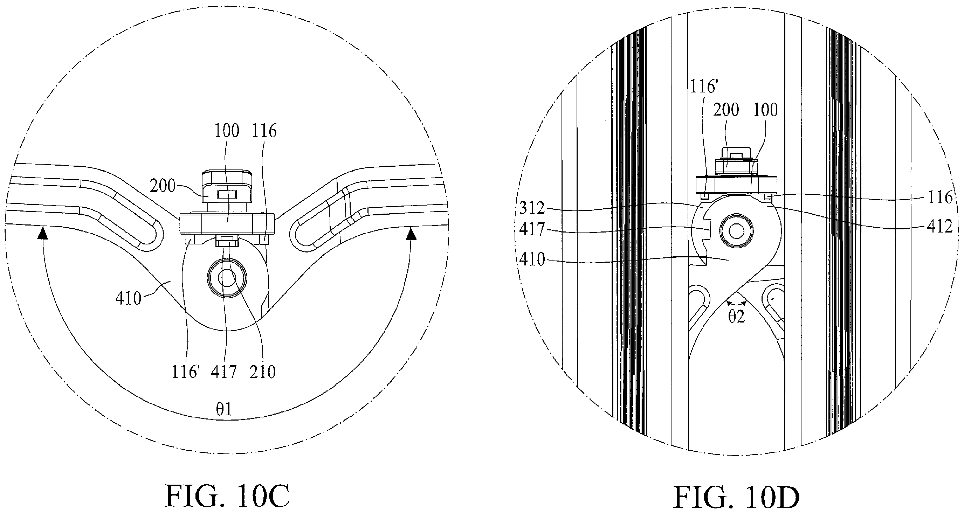

Referring to **FIG. 8**, **FIG. 9**, **FIG. 10A**, and **FIG. 10C**, **FIG. 10A** is a cross sectional view of a control portion, an operative portion, and a positioning member in a first state, and **FIG. 10C** is an enlarged schematic view showing a front view of a connector in a first state, in accordance with some embodiments of the present disclosure. When the mechanical structure **15** is in the first state, a first angle **θ₁** is between the first link **300** and the second link **400** of the connector **10Y**. In some embodiments, the first angle **θ₁** is an obtuse angle. In some embodiments, the first angle **θ₁** is 180 degrees. A first extension limiting portion **314** and a second extension limiting portion **414** are configured on the first end **310** of the first link **300** and the first end **410** of the second link **400** respectively in order to contact with the first protrusion **116** and the second protrusion **116'** when the mechanical structure **15** is in the first state, thus preventing over-rotation between the first link **300** and the second link **400**, or avoiding over-extension of the connector **100Y,** further improve the durability of the mechanical structure **15**, similar to the counterpart previously discussed in **FIG. 3** and **FIG. 3A**.

In addition, the first link **300** includes a first positioning portion **317** recessed toward the connection member **500**, and the second link **400** includes a second positioning portion **417** recessed toward the connection member **500**. In the first state, the first positioning portion **317** and the second positioning portion **417** are aligned, wherein the second end **200b** of the positioning member **200Y** engages with the first positioning portion **317** and the second positioning portion **417** and thus fixates the first link **300** and the second link **400**. Alternatively stated, second end **200b** of the positioning member **200Y** is configured to apply a force against the first positioning portion **317** and the second positioning portion **417** so that the first link **300** and the second link **400** is locked and may not be accidently rotated in an unpremeditated fashion.

The control portion **220** directly contacts with the second portion **120** of the operative portion **100Y**. In some embodiments, the control portion **220** may include a curved portion **220c** concaved toward the second portion **120** of the operative portion **100Y,** so that a contacted area/line/point between the control portion **220** and the second portion **120** of the operative portion **100Y** can serve as a rotation pivot.

Referring to **FIG. 8**, **FIG. 9**, **FIG. 10A**, **FIG. 10B**, and **FIG. 10D**, **FIG. 10B** is a cross sectional view of a control portion, an operative portion, and a positioning member in a second state, and **FIG. 10D** is an enlarged schematic view showing a front view of a connector in a second state, in accordance with some embodiments of the present disclosure. When the mechanical structure **15** is in the first state, the connector **10Y** can be unlocked by applying a force on the first end **220a** of the control portion **220** along a direction toward the second portion **120** of the operative portion **100Y** (i.e. pressing the first end **220a** of the control portion **220** toward the second portion **120** of the operative portion **100Y**, as shown in **FIG. 10B**), wherein the second end **220b** of the control portion **220** applies a force on the first end **200a** of the positioning member **200Y** along a direction away from the connection member **500**, thus the positioning member **200Y** moves away from the connection member **500** and thereby disengages with the first positioning portion **317** and the second positioning portion **417**. Thence the first link **300** and the second link **400** are allowed to be rotated, as an angle between the first link **300** and the second link **400** is decreased from the first angle **θ₁** to an angle less than the first angle **θ₁**. The mechanical structure **15** is thereby stowed. It is noteworthy that the angle between the first link **300** and the second link **400** are limited within a range from the first angle **θ₁** to the predetermined second angle **θ₂** less than the first angle **θ₁** by the first protrusion **116**, the second protrusion **116'** as well as the first stowing limiting portion **312** of the first link **300** and the second stowing limiting portion **412** of the second link **400**, as previously discussed in **FIG. 3** to **FIG. 7**.

When an angle between the first link **300** and the second link **400** is less than the first angle **θ₁**, by increasing the angle between the first link **300** and the second link **400** from an angle less than the first angle **θ₁** (e.g. the second angle **θ₂**) to the first angle **θ₁**, as well as an angle between the first part **551** and the second part **552**, the positioning member **200Y** moves toward the connection member **500** thence engages with the first positioning portion **317** of the first link **300** and the second positioning portion **417** of the second link **400**. The mechanical structure **15** is thereby transferred to the first state while the first link **300** and the second link **400** are locked.

In some embodiments, in order to ameliorate the connection between the control portion **220** and the positioning member **200Y**, the second end **220b** of the control portion **220** has a shape engaging with a through hole configured on the first end **200a** of the positioning member **200Y**. In some embodiments, the second end **220b** of the control portion **220** has a T-shape, a hook shape, a curved shape, or a shape at least partially surround the positioning member **200Y**.

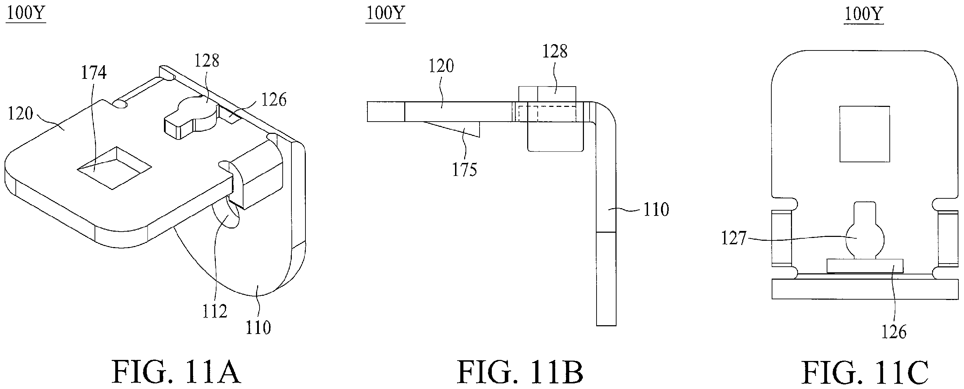

Referring to **FIG. 9**, **FIG. 11A**, **FIG. 11B**, and **FIG. 11C**, **FIG. 11A** is a perspective view showing an operative portion, **FIG. 11B** is a cross sectional view showing an operative portion, **FIG. 11C** is a bottom view showing an operative portion, in accordance with some embodiments of the present disclosure. In some embodiments, the operative portion **100Y** may include a recess **127** recessed from the second side **BS**, and optionally include a protrusion **128** protruded from the first side **FS**. The recess **127** may accommodate a longer elastic member **123** so that the elastic member **123** can store greater potential energy. The protrusion **128** may contact with at least a surface of the positioning member **200Y** so that the positioning member **200Y** may be moved in a stabilized fashion without undue shaking.

In some embodiments, a sleeve **150** may at least cover a portion of the second portion **120** of the operative portion **100Y** while a sleeve **250** may at least cover a portion of the first end **220a** of the control portion **220** so that a user can apply force on a mild surface, wherein a sharp edge, burr, metal edge, or rough surface can be covered by the sleeve **150** and the sleeve **250**, thus incise injury can be avoided. The sleeve **150** and the sleeve **250** may include plastic, polymer, rubber, organic substances, or the like. In some embodiments, the second portion **120** of the operative portion **100Y** and the first end **220a** of the control portion **220** may include a mating engagement structure, such as protrusions **175** and recesses **174**, to ameliorate adhesion with the sleeve **150** and the sleeve **250** respectively.

In some embodiments, the positioning member **200Y** or the control portion 220 include metal or metal alloy, so that the reliability thereof is improved. In some embodiments, the positioning member **200Y** or the control portion **220** includes hard plastic or polymer to reduce cost while sustaining adequate durability.

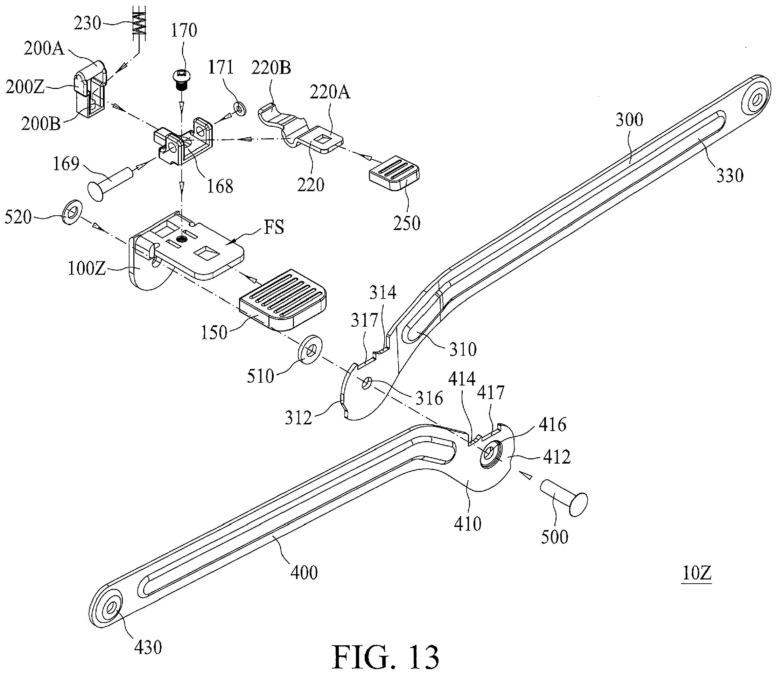

Referring to **FIG. 12** and **FIG. 13**, **FIG. 12** is a perspective view showing a connector **10Z** in a first state, and **FIG. 13** is an exploded view of a connector **10Z**, in accordance with some embodiments of the present disclosure. Note that hereinafter elements in **FIG. 12** to **FIG. 19** being the same as or similar to aforesaid counterparts within **FIG. 3** to **FIG. 7** and **FIG. 8** to **FIG. 11C** are denoted by the same reference numerals, as duplicated explanations are omitted. The connector **10Z** includes a first link **300**, a second link **400**, an operative portion **100Z** (which is a variation of the operative portion **100Y**), a positioning member **200Z** (which is a variation of the positioning member **200Y**), a control portion **220**, a connection member **500**, a shaft **169**, and a shaft base **168**. The configuration of the connector **10Y** and the connector **10Z** are similar, however, by incorporating the shaft **169** and a shaft base **168** thereto, the reliability of the control portion **220** can be further improved. Similar to the counterpart in the connecter **10Y**, the control portion **220** may include the curved portion **220c** concaved toward the second portion **120** of the operative portion **100Z**. In some embodiments, an angle between the first portion **110** and the second portion 120 is about 90 degrees. In some embodiments, no relative motion occurs between the first portion **110** and the second portion **120** herein.

In order to further ameliorate the stability, the shaft base **168** is disposed on the first side **FS** of the second portion **120** of the operative portion **100Z**, the shaft **169** is disposed on the shaft base **168**, and the control portion **220** is disposed between the shaft **169** and the shaft base **168**, wherein the curved portion **220c** surrounds at least a portion of the shaft **168**, so that the control portion **220** may rotate around the shaft **169** with improved smoothness. The shaft **168** may also limit the control portion **220** to avoid unacceptable shaking or detachment. It is noteworthy that the curved portion **220c** of the control portion **220** may contact with the shaft base **168**, wherein a contacted area/line/point between the control portion **220** and the shaft base **168** of the operative portion **100Z** can serve as a pivot.

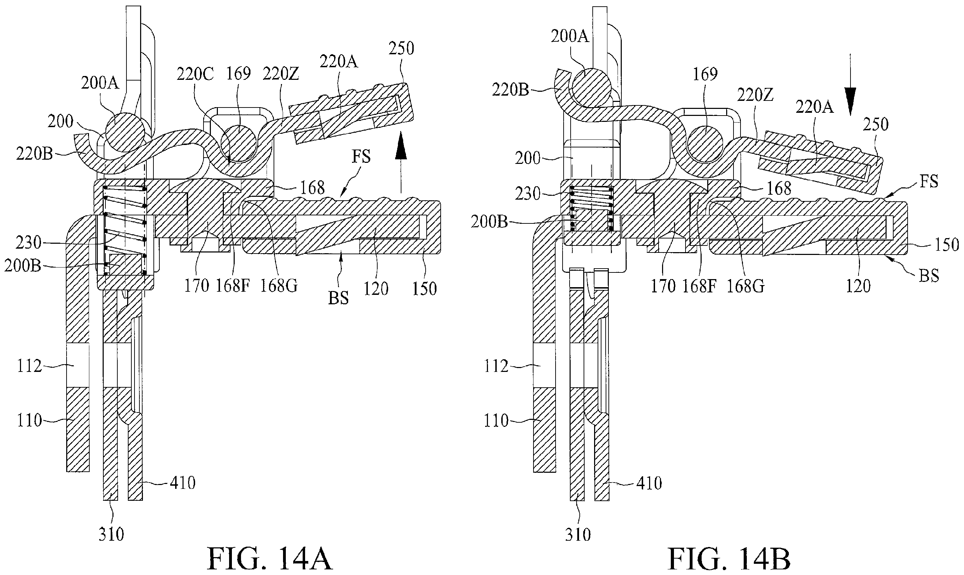

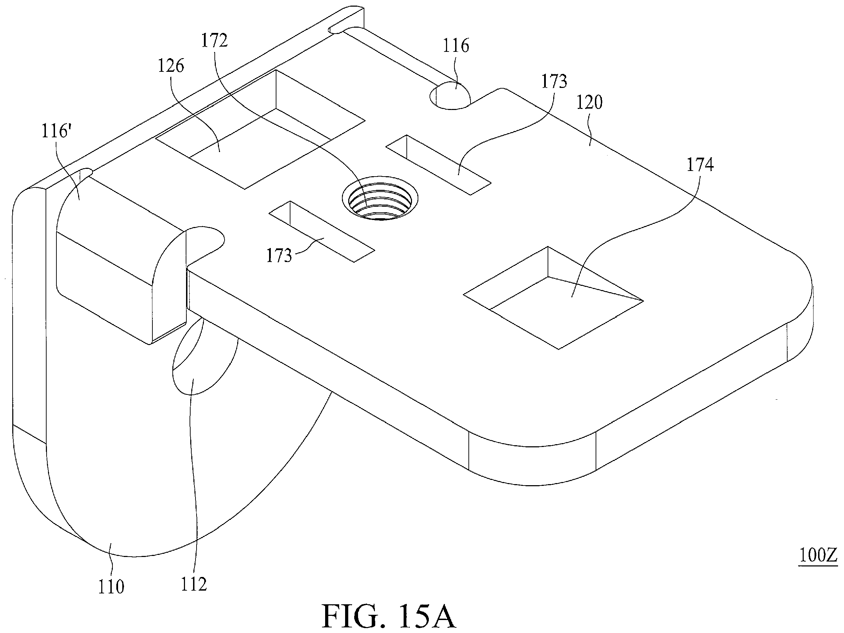

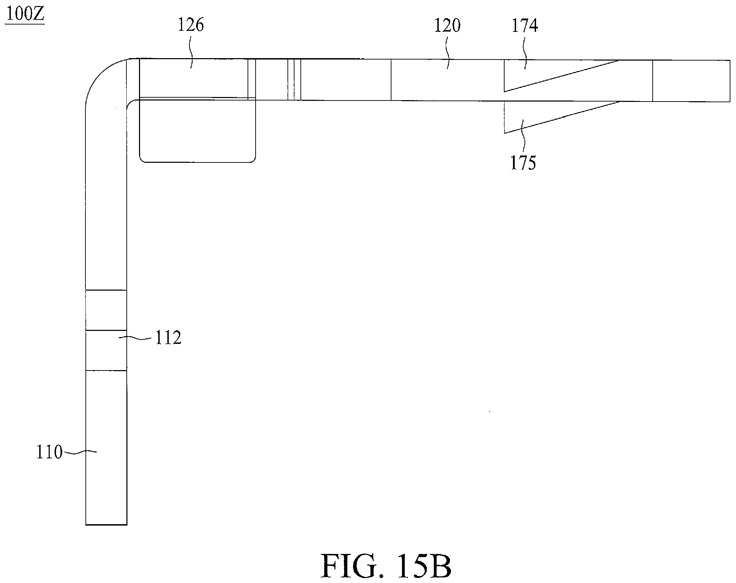

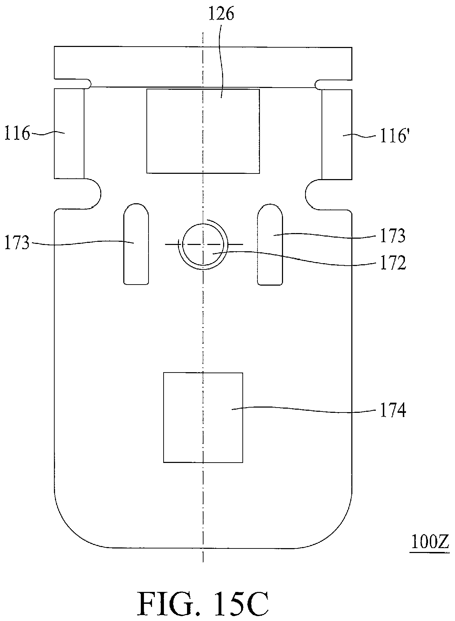

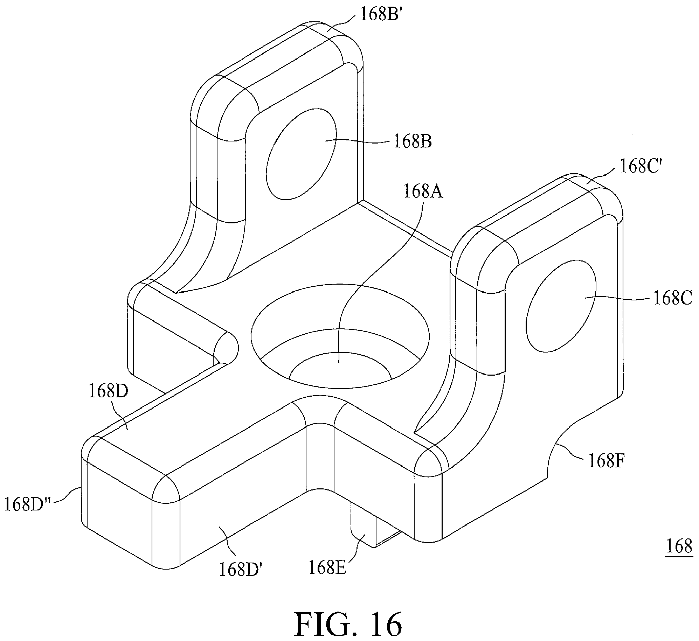

Referring to **FIG. 13**, **FIG. 14A**, **FIG. 14B**, **FIG. 15A**, **FIG. 15B**, **FIG. 15C** and **FIG. 16**, **FIG. 14A** is a cross sectional view of a control portion, an operative portion, and a positioning member in a first state, **FIG. 14B** is a cross sectional view of a control portion, an operative portion, and a positioning member in a second state, **FIG. 15A** is a perspective view showing an operative portion, **FIG. 15B** is a cross sectional view showing an operative portion, **FIG. 15C** is a bottom view showing an operative portion, and **FIG. 16** is a perspective view showing a shaft base, in accordance with some embodiments of the present disclosure. A fixture **170** may fixate the shaft base **168** on the first side **FS** of the second portion **120** of the operative portion **100Z**, as a mounting hole **172** is configured on the second portion **120** of the operative portion **100Z** to mate with the fixture **170**. In some embodiments, the fixture **170** may be a screw, as the mounting hole **172** may include screw thread. In some embodiments, the fixture **170** may be a rivet, as the rivet penetrates through the mounting hole **172** and engage with the second side **BS** of the second portion **120** of the operative portion **100Z.** In some embodiments, in order to further ameliorate stability, one or more slot **173** is optionally configured through the second portion **120** of the operative portion **100Z** as the shaft base **168** may include protrusions **168E** for mating or sticking with the slot **173**. In some embodiments, the shaft base **168** may include a mounting hole **168A** to receive the fixture **170**, wherein the mounting hole **168A** may include a necking structure, that is, a top portion of the mounting hole **168A** is wider than a bottom portion of the mounting hole **168A**, as at least a portion of the fixture **170** can be accommodated into the top portion of the mounting hole **168A** while a back surface of the fixture **170** is in contact with an interior top surface of the necking structure, thus fixation thereof can be boosted as the size of the connector **10Z** may be reduced.

The shaft base **168** may include a first sidewall **168B'** and a second sidewall **168C'**, as a first shaft hole **168B** and a second shaft hole **168C** can be configured on the first sidewall **168B'** and the second sidewall **168C'** respectively. The first shaft hole **168B** and the second shaft hole **168C** may stably accommodate the shaft **169**. The first shaft hole **168B** and the second shaft hole **168C** may, or may not be through holes. In some embodiments, the shaft **169** is a rivet, as the rivet may be in contact with an outer surface of the first sidewall **168B'** and/or an outer surface of the second sidewall **168C'**. In some other embodiments, a ring **171** is optionally included to increase contact area between the shaft **169** and the first sidewall **168B'** and/or the second sidewall **168C'**. In some embodiments, the shaft base **168** or the shaft **169** may include metal or metal alloy, so that the reliability thereof is improved. In some embodiments, the shaft base **168** or the shaft **169** may include hard plastic or polymer to reduce cost while sustaining adequate durability. The shaft **169** may be rotatable or fixed.

In some embodiments, a sleeve **150** may at least cover a portion of the second portion **120** of the operative portion **100Z** while a sleeve **250** may at least cover a portion of the first end **220a** of the control portion **220** so that a user can apply force on a mild surface, wherein a sharp edge, burr, metal edge, or rough surface can be covered by the sleeve **150** and the sleeve **250**, thus incise injury can be avoided. The sleeve **150** and the sleeve **250** may include plastic, polymer, rubber, organic substances, or the like. In some embodiments, the second portion **120** of the operative portion **100Z** and the first end **220a** of the control portion **220** may include a mating engagement structure, such as protrusions **175** and recesses **174**, to ameliorate adhesion with the sleeve **150** and the sleeve **250** respectively. The shaft base **168** may optionally include a concaved portion **168F**, so that a portion of the sleeve **150** may be interposed between the shaft base **168** and the second portion **120** of the operative portion **100Z.** Thence the size of the operative portion **100Z** can be reduced.

Referring to **FIG. 13****,** **FIG. 14A**, **FIG. 14B**, **FIG. 15A**, **FIG. 15B**, **FIG. 15C**, **FIG. 16** and **FIG. 17**, **FIG. 17** is a perspective view showing a positioning member, in accordance with some embodiments of the present disclosure. An opening is configured on the second portion **120** of the operative portion **100Z**, as the positioning member **200Z** may penetrate through the opening **126**. In some embodiments, the shaft base **168** optionally includes an extension portion **168D** to penetrate through the positioning member **200Z**. At least one of a first sidewall **168D'** of the extension portion **168D** and a second sidewall **168D"** of the extension portion **168D** may be in contact with the positioning member **200Z**, so that the movement of the positioning member **200Z** may be stabilized.

In some embodiments the first end **200a** of the positioning member **200Z** has a curved surface to engage with a curved surface of the second end **220b** of the control portion **220** concaved toward the second portion **120** of the operative portion **100Z**. The elastic member **230** is disposed between the second end **200b** of the positioning member **200Z** and a bottom of the shaft base **168** (e.g. a bottom surface of the extension portion **168D)** or a bottom surface of the second portion **120** of the operative portion **100Z**. In some embodiments, the second end **200b** of the positioning member **200Z** may include a post to stabilize the elastic member **230**. In some embodiments, the positioning member **200Z** may include metal or metal alloy, so that the reliability thereof is improved. In some embodiments, the positioning member **200Z** may include hard plastic or polymer to reduce cost while sustaining adequate durability.

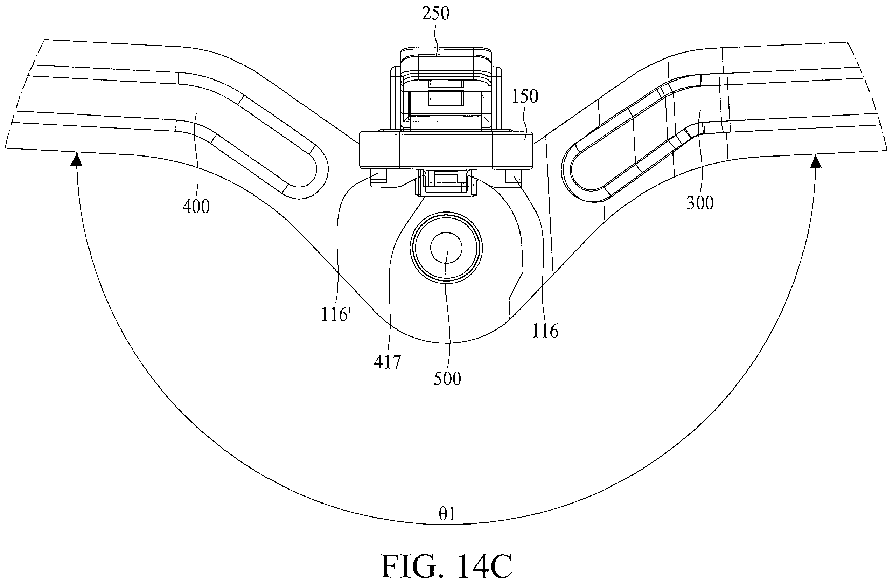

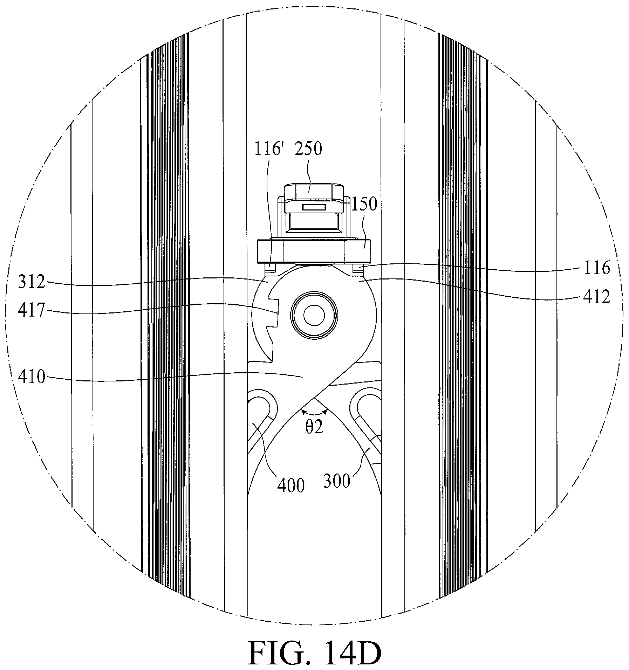

Referring back to **FIG. 13**, **FIG. 14A**, **FIG. 14B**, **FIG. 14C**, and **FIG. 14D**, **FIG. 14C** is an enlarged schematic view showing a front view of a connector **10Z** in a first state, **FIG. 14D** is an enlarged schematic view showing a front view of a connector **10Z** in a second state, in accordance with some embodiments of the present disclosure. In some embodiments, when the mechanical structure **15** (shown in **FIG. 1**) is in the first state, the first angle **θ₁** is between the first link **300** and the second link **400**. The first link **300** includes the first positioning portion **317** recessed toward the connection member **500**, and the second link **400** includes a second positioning portion **417** recessed toward the connection member **500**. In the first state, the first positioning portion **317** and the second positioning portion **417** are aligned, wherein the second end **200b** of the positioning member **200Z** engages with the first positioning portion **317** and the second positioning portion **417** and thus fixates the first link **300** and the second link **400**. Alternatively stated, the second end **200b** of the positioning member **200Z** is configured to apply a force against the first positioning portion **317** and the second positioning portion **417** so that the first link **300** and the second link **400** is locked and may not be accidently rotated in an unpremeditated fashion.

When the mechanical structure is in the first state, the connector **10Z** can be unlocked by applying a force on the first end **220a** of the control portion **220** along a direction toward the second portion **120** of the operative portion **100Z** (i.e. pressing the first end **220a** of the control portion **220** toward the second portion **120** of the operative portion **100Z**, as shown in **FIG. 10B**), wherein the second end **220b** of the control portion **220** applies a force on the first end **200a** of the positioning member **200Z** along a direction away from the connection member **500**, the control portion **220** rotates around the shaft **169,** thus the positioning member **200Z** moves away from the connection member **500** and thereby disengages with the first positioning portion **317** and the second positioning portion **417**. Thence the first link **300** and the second link **400** are allowed to be rotated, as an angle between the first link **300** and the second link **400** is decreased from the first angle **θ₁** to an angle less than the first angle **θ₁** (e.g. the second angle **θ₂**), The mechanical structure **15** is thereby stowed. It is noteworthy that the angle between the first link **300** and the second link **400** are limited within a range from the first angle **θ₁** to the predetermined second angle **θ₂** less than the first angle **θ₁** by the first protrusion **116** and the second protrusion **116'** and related configurations, as previously discussed in **FIG. 3** to **FIG. 7**.

When an angle between the first link **300** and the second link **400** is less than the first angle **θ₁** (e.g. the second angle **θ₂**), by increasing the angle between the first link **300** and the second link **400** from an angle less than the first angle **θ₁** (e.g. the second angle **θ₂**) to the first angle **θ₁**, as well as an angle between the first part **551** and the second part **552**, the control portion **220** rotates around the shaft **169** and the positioning member **200Z** moves toward the connection member **500** thence engages with the first positioning portion **317** and the second positioning portion **417.** The mechanical structure **15** is thereby transferred to the first state while the first link **300** and the second link **400** are locked.

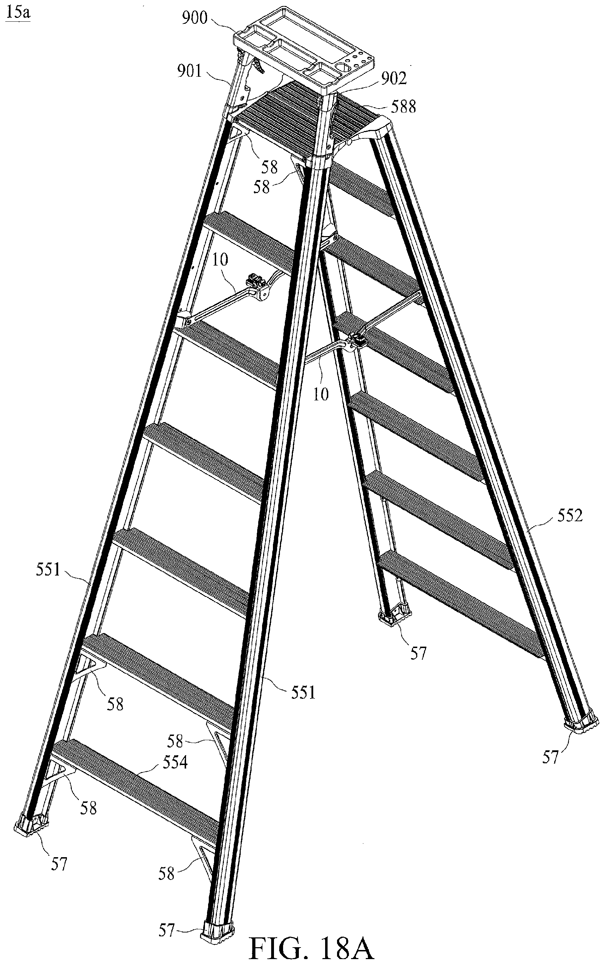

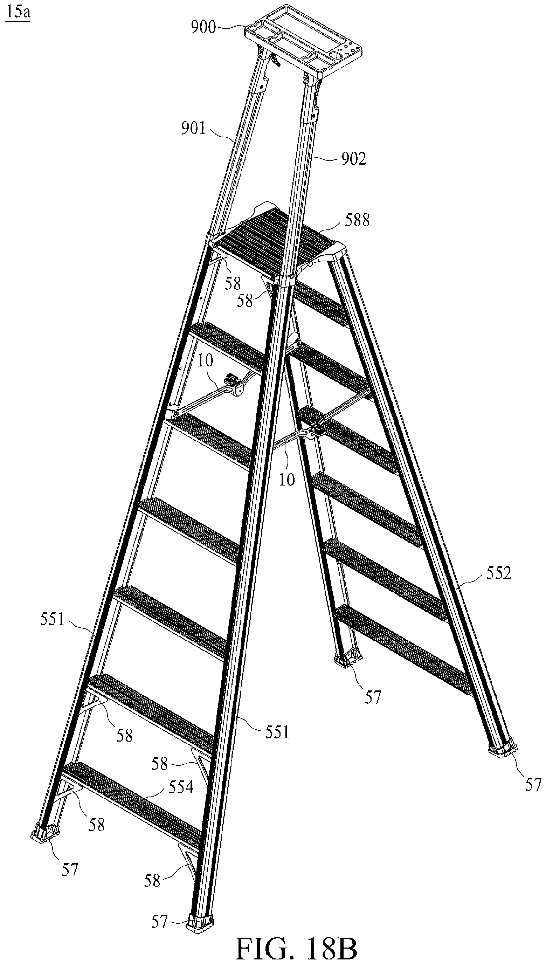

Referring to **FIG. 18A** and **FIG. 18B**, **FIG. 18A** is a perspective view showing a mechanical structure **15a** in a first state, and **FIG. 18B** is a perspective view showing a mechanical structure **15a** in a first state, in accordance with some embodiments of the present disclosure. In some embodiments, a trey **900** may be optionally disposed above the mechanical structure **15** provided in the present disclosure. In some embodiments, the trey **900** is connected to the first part **551** or the second part **552** by a first extendable structure **901** and a second extendable structure **902**, wherein the first extendable structure **901** and the second extendable structure **902** illustrated in **FIG. 18A** can be extended to the position illustrated in **FIG. 18B**. In some other embodiments, the trey **900** is connected to the first part **551** or the second part **552** by a fixed structure. The trey **900** may provide extra storage, such as a platform for placing hand tools. In some embodiments, the trey **900** may include fast assembly structures for convenient attachment and detachment.

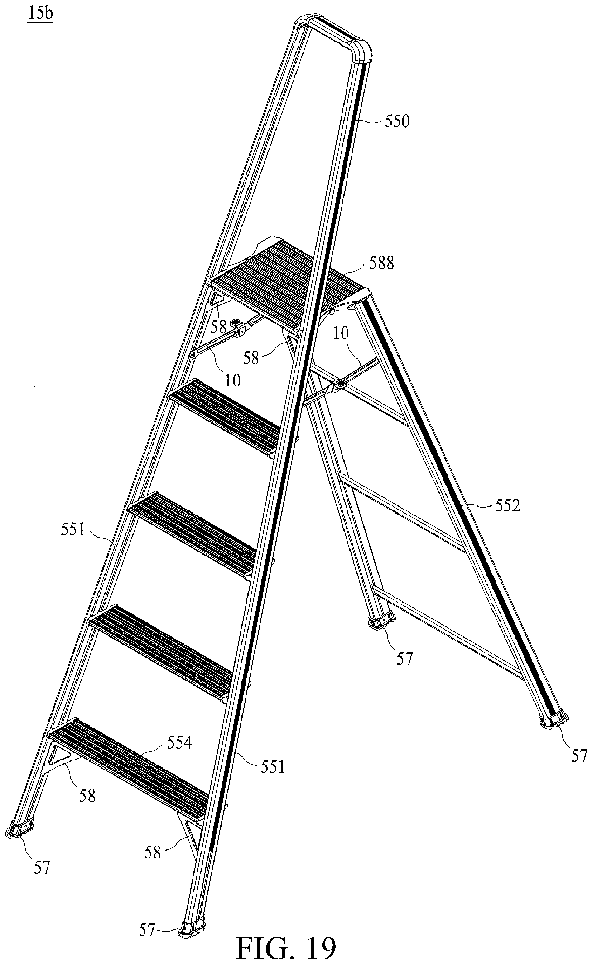

Referring to **FIG. 19**, **FIG. 19** is a perspective view showing a mechanical structure **15b** in a first state, in accordance with some embodiments of the present disclosure. In some embodiments, an extension structure **550** may be optionally disposed above the mechanical structure **15** provided in the present disclosure. The extension structure **550** may serve as a handle, or can be used for fixating a safety rope thereto.

Some embodiments of the present disclosure provide a mechanical structure, including a first link having a first end and a second end, a second link having a first end and a second end, an operative portion, wherein the operative portion comprises a first portion and a second portion unparalleled to the first portion, a connection member connecting the first end of the first link, the first end of the second link, and the first portion of the operative portion, a first protrusion on the second portion of the operative portion, a second protrusion on the second portion of the operative portion, wherein the first link is in contact with the first protrusion and the second link is in contact with the second protrusion when a first angle is between the first link and the second link.

Some embodiments of the present disclosure provide a mechanical structure, including a first link having a first end and a second end, wherein the first end comprises a first positioning portion, a second link having a first end and a second end, wherein the first end comprises a second positioning portion, an operative portion, wherein the operative portion comprises a first portion and a second portion unparalleled to the first portion, a connection member connecting the first end of the first link, the first end of the second link, and the first portion of the operative portion, a control portion above the operative portion, wherein the control portion comprises a first end and a second end, a positioning member connected to the second end of the control portion, wherein the positioning member engages with the first positioning portion and the second positioning portion when a first angle is between the first link and the second link.

The foregoing outlines features of several embodiments so that those skilled in the art may better understand the aspects of the present disclosure. Those skilled in the art should appreciate that they may readily use the present disclosure as a basis for designing or modifying other operations and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A mechanical structure, comprising:
a first link having a first end and a second end;
a second link having a first end and a second end;
an operative portion, wherein the operative portion comprises a first portion and a second portion unparalleled to the first portion;
a connection member connecting the first end of the first link, the first end of the second link, and the first portion of the operative portion;
a first protrusion on the second portion of the operative portion;
a second protrusion on the second portion of the operative portion, wherein the first link is in contact with the first protrusion and the second link is in contact with the second protrusion when a first angle is between the first link and the second link.

2. The mechanical structure of Claim 1, further comprising a control portion on a first side of the second portion of the operative portion, wherein the control portion comprises a first end and a second end opposite to the first end.

3. The mechanical structure of Claim 1, wherein the first protrusion and the second protrusion are on a second side facing the connection member.

4. The mechanical structure of Claim 1, wherein the first protrusion and the second protrusion are configured to limit an angle between the first link and the second link to be in a range from the first angle to a second angle less than the first angle.

5. The mechanical structure of Claim 4, wherein the first link is in contact with the second protrusion, the second link is in contact with the first protrusion when the second angle is between the first link and the second link.

6. The mechanical structure of Claim 2, further comprising a positioning member connected to the second end of the control portion.

7. The mechanical structure of Claim 6, wherein the first link comprises a first positioning portion recessed toward the connection member, and the second link comprises a second positioning portion recessed toward the connection member.

8. The mechanical structure of Claim 7, wherein the positioning member is configured to apply a force on the first positioning portion and the second positioning portion along a direction away from the operative portion when the first angle is between the first link and the second link.

9. A mechanical structure, comprising:
a first link having a first end and a second end, wherein the first end comprises a first positioning portion;
a second link having a first end and a second end, wherein the first end comprises a second positioning portion;
an operative portion, wherein the operative portion comprises a first portion and a second portion unparalleled to the first portion;
a connection member connecting the first end of the first link, the first end of the second link, and the first portion of the operative portion;
a control portion above the operative portion, wherein the control portion comprises a first end and a second end;
a positioning member connected to the second end of the control portion, wherein the positioning member engages with the first positioning portion and the second positioning portion when a first angle is between the first link and the second link.

10. The mechanical structure of Claim 9, wherein the first positioning portion is recessed toward the connection member and the second positioning portion is recessed toward the connection member.

11. The mechanical structure of Claim 9, wherein the positioning member applies a force on the first positioning portion and the second positioning portion along a direction away from the operative portion when the first angle is between the first link and the second link.

12. The mechanical structure of Claim 9, further comprising an elastic member configured to apply a force on the positioning member along a direction away from the operative portion.

13. The mechanical structure of Claim 9, wherein the positioning member disengages from the first positioning portion and the second positioning portion when a second angle less than the first angle is between the first link and the second link.

14. The mechanical structure of Claim 9, wherein the positioning member disengages from the first positioning portion and the second positioning portion when the first end of the control portion moves toward the operative portion.

15. The mechanical structure of Claim 9, further comprising:
a shaft base disposed on the second portion of the operative portion; and
a shaft disposed on the shaft base, wherein the control portion is configured to rotate around the shaft.
